# EUROPEAN PATENT APPLICATION

(11) **EP 2 410 162 A1**
(43) Date of publication of application: **25.01.2012**
(21) Application number: 09841880.9
(22) Date of filing: 19.03.2009
(51) Int. Cl.: F02D 45/00

(54) **CONTROLLER FOR INTERNAL-COMBUSTION ENGINE**

(71) Applicant: Toyota Jidosha Kabushiki Kaisha, Toyota-shi, Aichi 471-8571 (JP)
(72) Inventor: ENOMOTO, Hiroshi, Toyota-shi Aichi 471-8571 (JP)
(74) Representative: Winter, Brandl, Fürniss, Hübner, Röss, Kaiser, Polte - Partnerschaft
(86) International application number: PCT/JP2009/055510
(87) International publication number: WO 2010/106675

(57) **Abstract**

In a main crank identification control, a crank angle is identified based on output of a signal corresponding to a reference rotational phase of a crankshaft from a crank sensor. In a cam angle identification control, a predetermined rotational phase of an intake camshaft is identified based on output of a signal corresponding to the predetermined rotational phase of the intake camshaft from an intake cam sensor. When the predetermined rotational phase of the intake camshaft is identified through the cam angle identification control after the crank angle has been identified by the main crank angle identification control, the relationship between the predetermined rotational phase of the intake camshaft and the crank angle is learned through learning control. If the predetermined rotational phase of the intake camshaft is identified through the cam angle identification control with the crank angle unidentified, the crank angle is identified based on the predetermined rotational phase of the intake camshaft and the relationship learned through the learning control in sub-crank angle identification control.

## Description

### TECHNICAL FIELD

The present invention relates to a controller for an internal combustion engine that includes a crank sensor for outputting a signal corresponding to the rotational phase of a crankshaft and a cam sensor for outputting a signal corresponding to the rotational phase of a camshaft and identifies the rotational phase of the engine based on the output signals from the sensors.

### BACKGROUND ART

Conventionally, one such type of controller is described in, for example, Patent Document 1. Conventionally, typical controllers for an internal combustion engine, including the controller described in Patent Document 1, have a crankshaft and a camshaft. The crankshaft has a crank rotor, which rotates integrally with the crankshaft. The crank rotor has, for example, thirty-four teeth projecting in a radial direction and two tooth missing portions not projecting in the radial direction, which are spaced apart at 10 degrees in a circumferential direction of a crankshaft 20. Similarly, the camshaft has a cam rotor, which rotates integrally with the camshaft. The cam rotor has, for example, large diameter portions having a great radial dimension and small diameter portions having a small radial dimension, which are formed alternately in a circumferential direction of the camshaft. A crank sensor is arranged in the vicinity of the crank rotor to face the crank rotor. The crank sensor outputs signals corresponding to the teeth and tooth missing portions of the crank rotor, which are signals corresponding to the rotational phase of the crankshaft. A cam sensor is arranged in the vicinity of the cam rotor to face the cam rotor. The cam sensor outputs signals corresponding to the large diameter portions and small diameter portions of the cam rotor, which are signals corresponding to the rotational phase of the camshaft.

The controller for an internal combustion engine identifies the rotational phase (hereinafter, the crank angle CA (OCA to 720CA)) of the engine in the manner described below. That is, the controller calculates the rotational phase difference of the crankshaft in the period from when the crank sensor identifies the rotational phase corresponding to a tooth missing portion of the crank rotor (hereinafter, the "reference rotational phase") to when the signal output from the cam sensor changes for the first time after identification of the reference rotational phase. The controller then identifies the rotational phase of the engine based on the rotational phase difference of the crankshaft. Specifically, the reason for which the controller identifies the rotational phase of the engine in the above-described manner is that the rotational phase difference of the crankshaft in the period from when the crank sensor detects the reference rotational phase to when the cam sensor detects the rotational phase corresponding to the boundary between the large diameter portion and the small diameter portion of the cam rotor in the first rotation cycle of the crankshaft is different from the corresponding value in the second rotation cycle of the crankshaft in one cycle of engine rotation.

However, when the rotational phase of the engine is not identified as in a period of starting of the engine, the rotational phase of the engine remains unidentifiable at least until the crank sensor detects the reference rotational phase of the crankshaft. Accordingly, if the cam sensor detects the rotational phase corresponding to the boundary between the large diameter portion and the small diameter portion of the cam rotor (hereinafter, the "predetermined rotational phase") before the crank sensor detects the reference rotational phase of the crankshaft, the rotational phase of the engine may be identified based on the normal relationship between the predetermined rotational phase of the camshaft and the rotational phase of the engine.

In this manner, even before the rotational phase of the engine is identified based on detection of the reference rotational phase of the crankshaft by the crank sensor, the rotational phase of the engine is identified as being at an advanced timing if the predetermined rotational phase of the camshaft is detected. As a result, in a diesel engine, for example, the cylinder that reaches the compression top dead center earliest of all the cylinders, which is the cylinder corresponding to the initial target of fuel injection, is identified as being at an advanced timing. This improves starting performance of the engine. In a gasoline engine in which fuel is injected directly into the cylinders, the cylinder that performs a compression stroke earliest of all the cylinders, which is the cylinder corresponding to the initial target of fuel injection, is identified as being at an advanced timing. The starting performance of the engine is thus improved.

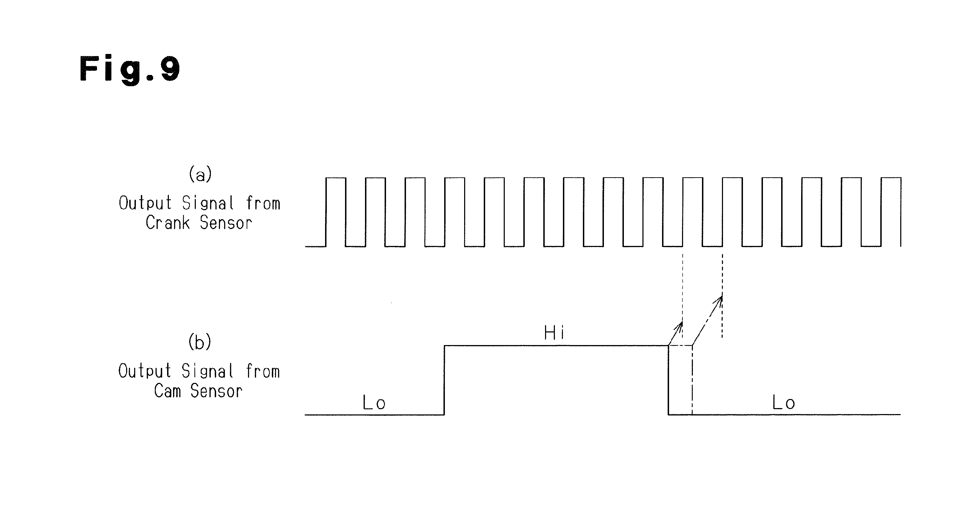

However, various components constituting the internal combustion engine including a crankshaft, a crank rotor, a crank sensor, a camshaft, a cam rotor, and a cam sensor may vary from one product to another when manufactured. Assembly variation may also be caused when these components are assembled together. Accordingly, as indicated by the solid lines and the broken lines in Fig. 9, the aforementioned variations may cause deviation in the relationship between the rotational phase of the camshaft and the rotational phase of the crankshaft, which is the relationship between the predetermined rotational phase of the camshaft and the rotational phase of the engine, from the normal relationship. In this case, the rotational phase of the engine identified based on the relationship between the predetermined rotational phase of the camshaft and the rotational phase of the engine is deviated from the actual rotational phase. As a result, in the diesel engine, for example, the cylinder that reaches the compression top dead center earliest of all cylinders cannot be accurately identified or fuel injection cannot be carried out at an appropriate timing, which is disadvantageous. This hampers adequate improvement in the starting performance of the engine. In a gasoline engine that injects fuel directly into the cylinders, the cylinder that performs the compression stroke earliest of all cylinders cannot be accurately identified or fuel injection or ignition cannot be carried out at an appropriate timing. The starting performance of the engine thus cannot be adequately improved.

The above-described problems are not limited to fuel injection control in diesel engines or direct injection type gasoline engines. The problems may occur generally in common for controllers for internal combustion engines that have a crank sensor for outputting a signal corresponding to the rotational phase of a crankshaft and a cam sensor for outputting a signal corresponding to the rotational phase of a camshaft, and identify the rotational phase of the engine based on the signals output from the sensors.
Patent Document 1: Japanese Laid-Open Patent Publication No. 2003-3901

### SUMMARY OF THE INVENTION

Accordingly, it is an objective of the present invention to provide a controller for an internal combustion engine capable of accurately identifying the rotational phase of the engine prior to identification of the rotational phase of the engine based on detection of a reference rotational phase of a crankshaft by a crank sensor.

To achieve the above objective, a controller for an internal combustion engine according to the present invention includes a crank sensor for outputting a signal corresponding to rotational phase of a crankshaft of an engine, a cam sensor for outputting a signal corresponding to rotational phase of a camshaft of the engine, a first identifying section for identifying a rotational phase of the engine based on output of a signal corresponding to a reference rotational phase of the crankshaft from the crank sensor, a second identifying section for identifying a predetermined rotational phase of the camshaft based on output of the signal corresponding to the predetermined rotational phase of the camshaft from the cam sensor, a learning section for learning the relationship between the predetermined rotational phase of the camshaft and the rotational phase of the engine when the predetermined rotational phase of the camshaft is identified by the second identifying section in a state where the rotational phase of the engine has been identified by the first identifying section, and a third identifying section for identifying the rotational phase of the engine based on the predetermined rotational phase of the camshaft and the relationship that has been learned by the learning section when the predetermined rotational phase of the camshaft is identified by the second identifying section in a state where the rotational phase of the engine is not identified by the first identifying section.

In the above-described configuration, when the predetermined rotational phase of the camshaft is identified by the second identifying section after the rotational phase of the engine has been identified by the first identifying section, the learning section learns the relationship between the predetermined rotational phase of the camshaft and the rotational phase of the engine. In this manner, the relationship between the predetermined rotational phase of the camshaft and the rotational phase of the engine is acknowledged accurately. If the predetermined rotational phase of the camshaft is identified by the second identifying section with the rotational phase of the engine unidentified by the first identifying section, the rotational phase of the engine is identified based on the relationship that has been learned by the learning section. As a result, before the rotational phase of the engine is identified based on detection of the reference rotational phase of the crankshaft by the crank sensor, the rotational phase of the engine is identified accurately.

According to one aspect of the present invention, the controller includes an engine control section that performs engine control based on the rotational phase of the engine identified by the first identifying section. If the rotational phase of the engine is identified by the third identifying section before a rotational position of the engine is identified by the first identifying section, the engine control section carries out the engine control based on the rotational phase of the engine identified by the third identifying section.

In the above-described configuration, even before the rotational phase of the engine is identified by the first identifying section, engine control is carried out based on the rotational phase of the engine that has been identified accurately by a third identifying section. In this manner, various problems are prevented from happening due to the fact that the rotational phase of the engine is not identified by the first identifying section.

The timing for identifying the rotational phase of the engine often falls in the period of the starting of the engine in which the engine speed is comparatively low. Accordingly, it is desirable to learn the relationship between the predetermined rotational phase of the camshaft and the rotational phase of the engine through the learning section when the engine speed is in a range close to the idle speed.

According to one aspect of the invention, the engine is a diesel engine having a plurality of cylinders, and the engine control section performs fuel injection control. When the rotational phase of the engine is identified by the third identifying section before the rotational position of the engine is identified by the first identifying section, the engine control section identifies the cylinder that reaches a compression top dead center earliest of the cylinders when starting of the engine based on the rotational phase of the engine identified by the third identifying section, and performs fuel injection into the identified cylinder.

In the above-described configuration, the cylinder that reaches the compression top dead center earliest of the cylinders, which is the cylinder corresponding to the initial target of fuel injection, is identified as being at an advanced timing. This adequately improves starting performance of the engine.

According to one aspect of the present invention, the engine is a gasoline engine that has a plurality of cylinders and injects fuel directly into the cylinders, and the engine control section performs fuel injection control and ignition control. When the rotational phase of the engine is identified by the third identifying section before the rotational position of the engine is identified by the first identifying section, the engine control section identifies the cylinder that performs a compression stroke earliest of the cylinders when starting of the engine based on the rotational phase of the engine identified by the third identifying section, and performs fuel injection and ignition for the identified cylinder.

In the above-described configuration, the cylinder that performs a compression stroke earliest of the cylinders, which is the cylinder corresponding to the initial target of fuel injection, is identified as being at an advanced timing. This adequately improves the starting performance of the engine.

According to one aspect of the present invention, the engine is a gasoline engine that has a plurality of cylinders and injects fuel into intake ports each connected to the corresponding one of the cylinders, and the engine control section performs fuel injection control and ignition control. When the rotational phase of the engine is identified by the third identifying section before the rotational position of the engine is identified by the first identifying section, the engine control section identifies the cylinder that performs an intake stroke earliest of the cylinders when starting of the engine based on the rotational phase of the engine identified by the third identifying section, and performs fuel injection and ignition for the identified cylinder.

In the above-described configuration, the cylinder that performs an intake stroke earliest of the cylinders, which is the cylinder corresponding to the initial target of fuel injection, is identified being at an advanced timing. This adequately improves the starting performance of the engine.

It is desirable that the cam sensor is configured to output a first signal and a second signal different from the first signal alternately in correspondence with the rotational phase of the camshaft, and that the rotational phase of the camshaft at the time when an output signal from the cam sensor changes between the first signal and the second signal is set as the predetermined rotational phase.

Further, it is desirable that the camshaft has a cam rotor that rotates integrally with the camshaft, that the cam rotor is formed by arranging large diameter portions each having a large dimension in a radial direction of the cam rotor and small diameter portions each having a small dimension in the radial direction of the cam rotor alternately in a circumferential direction of the cam rotor, and that the cam sensor is configured to output the first signal in correspondence with the large diameter portions and the second signal in correspondence with the small diameter portions.

The first identifying section may calculate a rotational phase difference of the crankshaft in the period from when the crank sensor identifies the reference rotational phase to when the output signal from the cam sensor changes for the first time after the identification of the reference rotational phase, and identify the rotational phase of the engine based on the rotational phase difference of the crankshaft.

The second identifying section may calculate a rotational phase difference of the crankshaft in the period from a first rotational phase at which the output signal from the cam sensor changes to a second rotational phase at which the output signal from the cam sensor changes again, and identify the second rotational phase as the predetermined rotational phase based on the rotational phase difference of the crankshaft.

The present invention may be embodied in such a manner that the camshaft has two phase ranges in which the rotational phase difference of the crankshaft in the period from the first rotational phase at which the output signal from the cam sensor changes to the second rotational phase at which the output signal from the cam sensor changes again remains constant. In this case, the second identifying section identifies the second rotational phase as the predetermined rotational phase based on the output signal from the cam sensor in the period from the first rotational phase at which the output signal from the cam sensor changes to the second rotational phase at which the output signal from the cam sensor changes immediately afterwards.

As long as the camshaft has two phase ranges in which the rotational phase difference of the crankshaft in the period from the first rotational phase at which the output signal from the cam sensor changes to the second rotational phase at which the output signal from the cam sensor changes immediately afterwards remains constant, the predetermined rotational phase of the camshaft cannot be identified only based on the rotational phase difference of the crankshaft.

To solve this problem, if the predetermined rotational phase of the camshaft is identified based on the output signal from the cam sensor in the aforementioned period as in the above-described configuration, the predetermined rotational phase of the camshaft is identified accurately.

### BRIEF DESCRIPTION OF THE DRAWINGS

Fig. 1 is a diagram schematically illustrating the configuration of one embodiment of a controller for an internal combustion engine according to the present invention;
Fig. 2 is a diagram schematically illustrating the configuration of the embodiment of the controller for the engine;
Fig. 3 is a diagram representing the normal relationship between the crank angle and the intake cam rotor in the embodiment in accordance with concentric circles;
Fig. 4 is a timing chart representing the normal relationship between the output signal (a) of the crank sensor and the output signal (b) of an intake cam sensor 62 in the embodiment;
Fig. 5 is a flowchart representing the steps of a procedure for controlling fuel injection at the time of starting of the engine in the embodiment;
Fig. 6 is a flowchart representing the steps of a learning control procedure in the embodiment;
Fig. 7(a) is a table representing the relationship among the crank angle change amount, the signal output from the intake cam sensor, and the edge position of the intake cam rotor in the embodiment;
Fig. 7(b) is a table representing the relationship between the edge position of the intake cam rotor and the crank angle learned value in the embodiment;
Fig. 8 is a flowchart representing the steps of a procedure for controlling identification of the sub-crank angle in the embodiment; and
Fig. 9 is a timing chart representing an example of the relationship between the rotational phase of the camshaft and the rotational phase of the crankshaft.

### BEST MODE FOR CARRYING OUT THE INVENTION

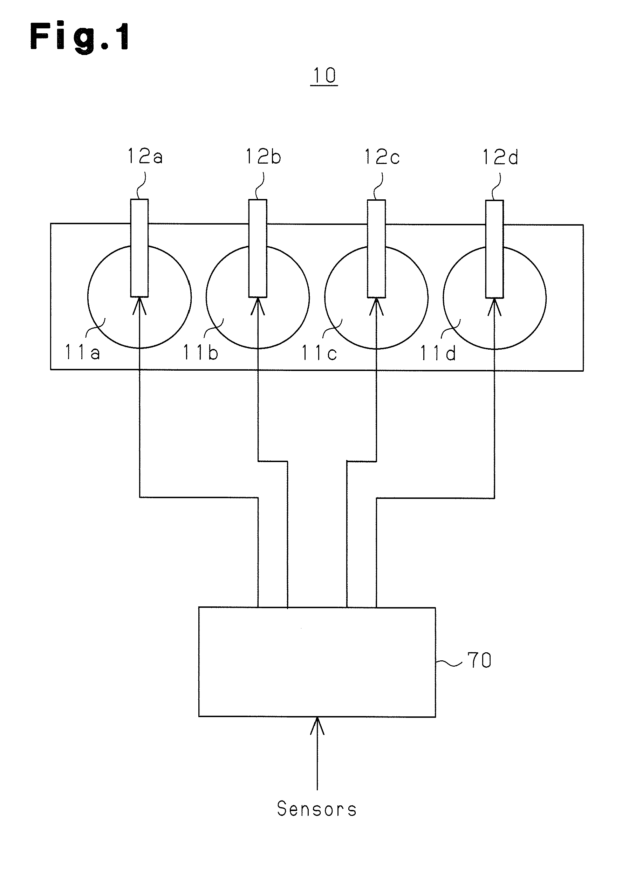

An embodiment of a controller for an internal combustion engine according to the present invention, which is a controller for a diesel engine, will now be described with reference to Figs. 1 to 7.

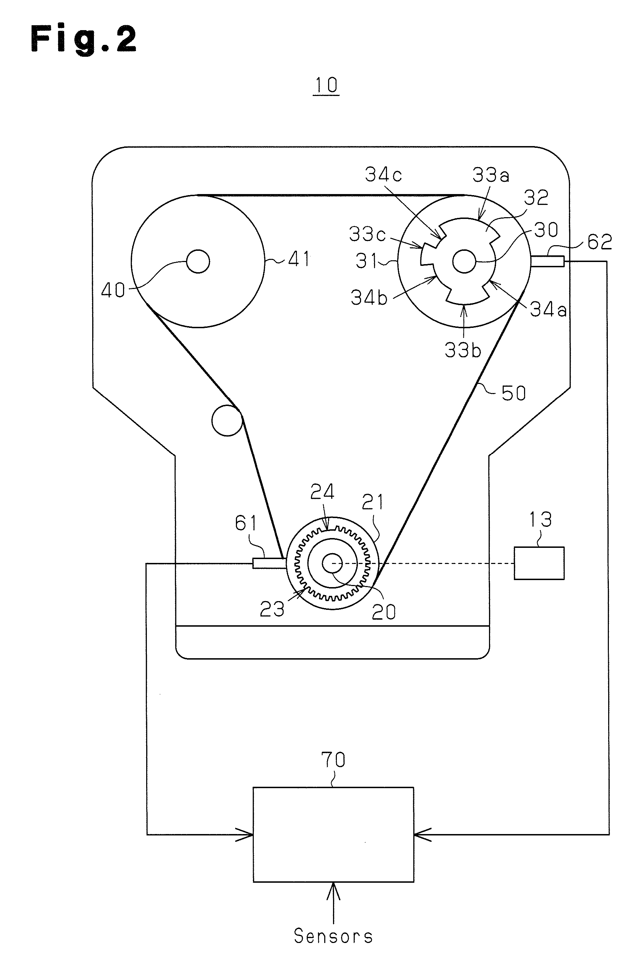

Figs. 1 and 2 schematically show the configuration of the controller for the engine of the illustrated embodiment.

With reference to Fig. 1, an internal combustion engine 10 has four cylinders 11a, 11b, 11c, 11d, which have fuel injection valves 12a, 12b, 12c, 12d, respectively, which inject fuel directly into the associated cylinders 11a to 11d.

As illustrated in Fig. 2, a crank pulley 21 is formed in a crankshaft 20 of the engine 10. An intake cam pulley 31 is arranged in an intake camshaft 30. An exhaust cam pulley 41 is formed in an exhaust cam pulley 40. A timing belt 50 is wound around the crank pulley 21, the intake cam pulley 31, and the exhaust cam pulley 41.

The crankshaft 20 has a crank rotor 22, which rotates integrally with the crankshaft 20. The crank rotor 22 has thirty-four radially projecting teeth 23 and two radially flat tooth missing portions 24, which are spaced apart at 10 degrees in a circumferential direction of the crankshaft 20.

The intake camshaft 30 has an intake cam rotor 32, which rotates integrally with the intake camshaft 30. The intake cam rotor 32 has three large diameter portions 33a, 33b, 33c each having a large radial dimension, and three small diameter portions 34 each having a small radial dimension, which are arranged alternately in a circumferential direction of the intake camshaft 30.

With reference to Figs. 1 and 2, an electronic control unit 70 for controlling the engine 10 has a microcomputer. The electronic control unit 70 receives detection signals from various sensors for detecting the engine operating state.

The sensors include, for example, a crank sensor 61, which is arranged in the vicinity of the crank rotor 22 to face the crank rotor 22, and outputs signals corresponding to the teeth 23 and the tooth missing portions 24 of the crank rotor 22, which are signals corresponding to the rotational phase of the crankshaft 20. The sensors also include an intake cam sensor 62, which is formed in the vicinity of the intake cam rotor 32 to face the intake cam rotor 32, and outputs signals corresponding to the large diameter portions 33a to 33d and the small diameter portions 34a to 34d of the cam rotor 32, which are signals corresponding to the rotational phase of the intake camshaft 30. Also, an accelerator operating amount sensor for detecting the accelerator operating amount, which is the depression amount of the accelerator pedal, and a coolant temperature sensor for detecting the temperature of the coolant in the engine 10 (neither is shown) are employed.

The electronic control unit 70 performs various types of calculations using detection signals from the sensors. Based on calculation results, the electronic control unit 70 performs control for calculating the engine speed NE, which is the rotational speed of the crankshaft 20, operation control for a starter motor 13, control for identifying the rotational phase of the engine 10 (hereinafter, referred to as "crank angle identification control"), which is a crank angle CA (OCA to 720CA), and operation control for fuel injection valves 12a, 12b, 12c, 12d (hereinafter, "fuel injection control").

In the control for calculating the engine speed NE, the engine speed NE is calculated based on the number of the pulse signals per hour detected by the crank sensor 61.

In the operation control for the starter motor 13, an actuation command is provided to the starter motor 13 in the period from when an engine starting command is generated to start the engine to when the engine speed NE reaches a value greater than or equal to an engine-start determination speed (which is, for example, 400 rpm).

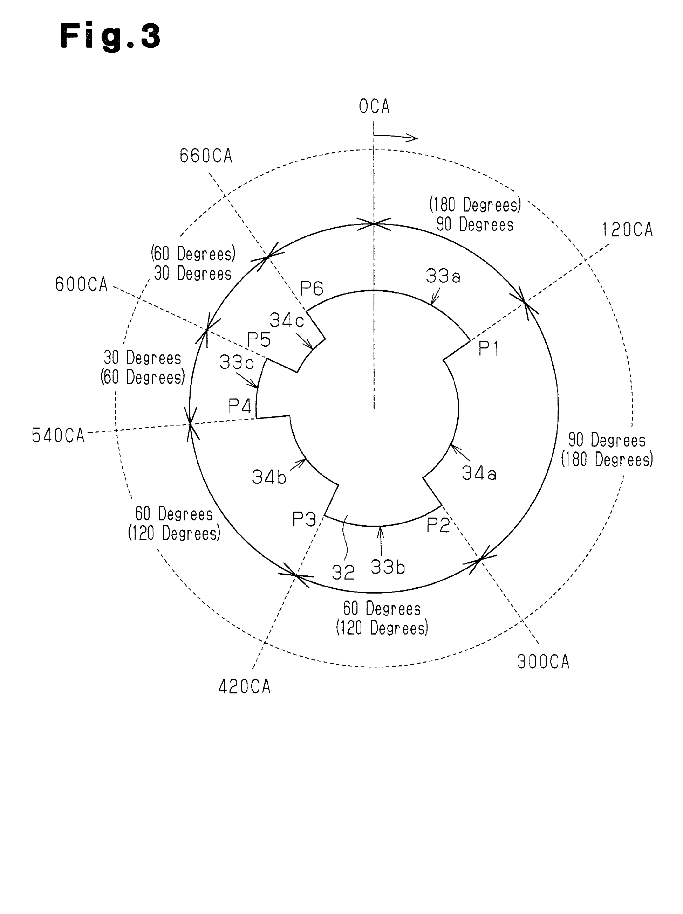

The normal relationship between the crank angle CA and the intake cam rotor 32 in the engine 10 of the illustrated embodiment will hereafter be described with reference to Fig. 3. Fig. 3 is a diagram schematically representing the normal relationship between the crank angle CA and the intake cam rotor 32 in accordance with the concentric circles. Fig. 3 shows the central angles of the large diameter portions 33a to 33c and the small diameter portions 34a to 34c of the intake cam rotor 32. Also, the change amounts of the crank angle CA corresponding to the central angles are shown in the parenthesis.

As illustrated in Fig. 3, in the intake cam rotor 32, a first large diameter portion 33a and a second small diameter portion 34a each having the central angle of 90 degrees, a second large diameter portion 33b and a second small diameter portion 34b each having the central angle of 60 degrees, and a third large diameter portion 33c and a third small diameter portion 34c each having the central angle of 30 degrees are formed sequentially in that order in the clockwise direction from the upper side of the diagram. The engine 10 is configured in such a manner that the crankshaft 20 is rotated twice each time the intake camshaft 30 and the exhaust camshaft 40 are rotated once. Accordingly, the central angle (90 degrees) of the first large diameter portion 33a and the first small diameter portion 34a of the intake cam rotor 32 corresponds to a change amount of 180 degrees for the crank angle CA. The central angle (60 degrees) of the second large diameter portion 33b and the second small diameter portion 34b of the intake cam rotor 32 corresponds to the change amount of 120 degrees for the crank angle CA. The central angle (30 degrees) of the third large diameter portion 33c and the third small diameter portion 34c of the intake cam rotor 32 corresponds to the change amount of 60 degrees for the crank angle CA.

The rotational phase of the large diameter portion 33a having the central angle of 90 degrees that divides the central angle by the ratio of 7 to 11 (35 degrees to 55 degrees) is defined as the reference rotational phase of the engine 10, which is "OCA" of the crank angle CA. The first edge position P1, or the boundary between the first large diameter portion 33a and the first small diameter portion 34a, corresponds to "120CA" of the crank angle CA. The second edge position P2, or the boundary between the first small diameter portion 34a and the second large diameter portion 33b, corresponds to "300CA" of the crank angle CA. The third edge position P3, or the boundary between the second large diameter portion 33b and the second small diameter portion 34b, corresponds to "420CA" of the crank angle CA. The fourth edge position P4, or the boundary between the second small diameter portion 34b and the third large diameter portion 33c, corresponds to "540CA" of the crank angle CA. The fifth edge position P5, or the boundary between the third large diameter portion 33c and the third small diameter portion 34c, corresponds to "600CA" of the crank angle CA. The sixth edge position P6, or the boundary between the third small diameter portion 34c and the first large diameter portion 33a, corresponds to "660CA" of the crank angle CA.

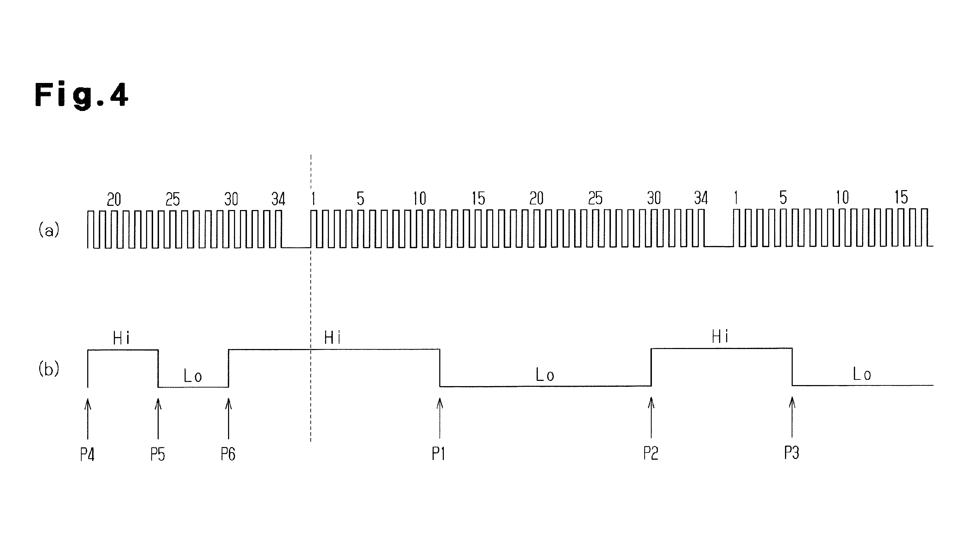

The normal relationship between the output signal of the crank sensor 61 and the output signal of the intake cam sensor 62 in the engine 10 of the illustrated embodiment will hereafter be described with reference to Fig. 4. Fig. 4 is a timing chart representing the normal relationship between the output signal (a) of the crank sensor 61 and the output signal (b) of the intake cam sensor 62.

As represented in Fig. 4(a), when the teeth 23 of the crank rotor 22 pass in front of the detecting portion of the crank sensor 61 as the crankshaft 20 rotates, the crank sensor 61 provides pulse signals (hereinafter, referred to as "crank pulses"), which are signals at a high voltage level, to the electronic control unit 70. In contrast, when the tooth missing portions 24 of the crank rotor 22 pass in front of the detecting portion of the crank sensor 61, the crank pulses are not sent to the electronic control unit 70. In the crank rotor 22, the thirty-four teeth 23 are arranged between the two tooth missing portions 24. As a result, the 1^{st} to 34^{th} crank pulses are detected in the period from when the tooth missing portions 24 of the crank rotor 22 pass in front of the detecting portion of the crank sensor 61 to when the tooth missing portions 24 re-pass in front of the detecting portion.

As represented in Fig. 4(b), when the large diameter portions 33a to 33c of the intake cam rotor 32 pass in front of the detecting portion of the intake cam sensor 62 as the intake camshaft 30 rotates, the intake cam sensor 62 sends Hi signals, which are signals at a high voltage level, to the electronic control unit 70. In contrast, when the small diameter portions 34a to 34c of the intake cam rotor 32 pass in front of the detecting portion of the intake cam sensor 62, the intake cam sensor 62 provides Lo signals, which are signals at a low voltage level, to the electronic control unit 70. The intake cam sensor 62 thus generates the Hi signals and the Lo signals alternately in correspondence with the rotational phase of the intake camshaft. The Hi signals each correspond to the first signal and the Lo signals each correspond to the second signal of the present invention.

As represented in both Figs. 4(a) and 4(b), in a cycle of engine rotation, the rise of the 12^{th} crank pulse in the first rotation cycle of the crankshaft 20 corresponds to the first edge position P1. Also in one cycle of engine rotation, the rise of the 30^{th} crank pulse in the first rotation cycle of the crankshaft 20 corresponds to the second edge position P2. Further, in the cycle of engine rotation, the rise of the 6^{th} crank pulse in the second rotation cycle of the crankshaft 20 corresponds to the third edge position P3.

In one cycle of engine rotation, the rise of the 18^{th} crank pulse in the second rotation cycle of the crankshaft 20 corresponds to the fourth edge position P4. In one cycle of engine operation, the rise of the 24^{th} crank pulse in the second rotation cycle of the crankshaft 20 corresponds to the fifth edge position P5. In one cycle of engine rotation, the rise of the 30^{th} pulse signal in the second rotation cycle of the crankshaft 20 corresponds to the sixth edge position P6.

In the illustrated embodiment, the crank angle CA (OCA to 720CA) is identified through main crank angle identification control, which will be described below. Specifically, in the main crank angle identification control, the number of crank pulses ΔNcrnk detected in the period from when the crank sensor 61 detects the rotational phase corresponding to the tooth missing portions 24 of the crank rotor 22 (hereinafter, referred to as the "reference rotational phase") to when the output signal from the intake cam sensor 62 changes for the first time after detection of the reference rotational phase is calculated. The crank angle CA corresponding to the reference rotational phase is then identified based on the number of crank pulses ΔNcrnk. The reason for which the identification is carried out in the above-described manner is that the number of crank pulses ΔNcrnk in the period from when the reference rotational phase is detected by the crank sensor 61 to when the signal output from the intake cam sensor 62 changes in the first rotation cycle of the crankshaft 20 is different from the corresponding value in the second rotation cycle of the crankshaft 20 in a cycle of engine rotation. In the engine 10 of the illustrated embodiment, the number of crank pulses ΔNcrnk in the period from when the reference rotational phase is detected by the crank sensor 61 to when the output signal from the intake cam sensor 62 changes for the first time after such detection, which is the time point corresponding to the first edge position P1, is eleven in the first rotation cycle of the crankshaft 20 in a cycle of engine rotation. In contrast, the number of crank pulses ΔNcrnk is five in the second rotation cycle of the crankshaft 20 in one cycle of engine rotation. After the crank angle CA corresponding to the aforementioned reference rotational phase of the crankshaft 20 is identified, the current crank angle CA is identified based on the number of crank pulses that will be output later. The electronic control unit 70 that executes the main crank angle identification control corresponds to the first identifying section of the present invention.

When the engine is started, the crank angle CA remains unidentifiable until the output signal from the intake cam sensor 62 changes after the reference rotational phase of the crankshaft 20 is detected by the crank sensor 61 through the main crank angle identification control.

To solve this problem, a predetermined edge position P(X) (X = any one of 1 to 6) of the intake cam rotor 32 may be identified through cam angle identification control, which will be described below, and the crank angle CA is identified based on the normal relationship between the edge position P(X) and the crank angle CA (see Fig. 3). Specifically, in the cam angle identification control, the number of crank pulse ΔNcrnk in the period from a first rotational phase (any one of the edge positions P1 to P6) at which the output signal from the intake cam sensor 62 changes to a second rotational phase (any one of the edge positions P1 to P6) at which the output signal from the intake cam sensor 62 changes again is calculated. Based on the combination of the aforementioned number of crank pulses ΔNcrnk and the output signal (the Hi signal or the Lo signal) of the intake cam sensor 62 in the aforementioned period, the second rotational phase is identified as the rotational phase corresponding to the predetermined edge position P1 to P6 of the intake cam rotor 62 (hereinafter, referred to as the "predetermined rotational phase"). The reason for which the identification is performed in the above-described manner is that the combination of the number of crank pulses ΔNcrnk in the period from the first rotational phase at which the output signal from the intake cam sensor 62 changes to the second rotational phase at which the output signal from the intake cam sensor 62 changes again and the output signal (the Hi signal or the Lo signal) from the intake cam sensor 62 in the aforementioned period is varied from one predetermined edge position P1 to P6 of the intake cam rotor 62 to another. After the predetermined rotational phase of the intake camshaft 30, or the predetermined edge position P1 to P6, is identified, the crank angle CA is identified based on the normal relationship between the predetermined rotational phase of the intake camshaft 30 and the crank angle CA, which is illustrated in Fig. 3. The electronic control unit 70 that performs the cam angle identification control corresponds to the second identifying section of the present invention.

In this manner, even before the crank angle CA is identified through the main crank angle identification control, the crank angle CA is identified as being at an advanced timing if the predetermined rotational phase of the intake camshaft 30 is detected through the second crank angle identification control. As a result, the cylinder 11a to 11d that reaches the compression top dead center earliest of all cylinders 11a to 11d, which is the cylinder 11a to 11d corresponding to the initial target of fuel injection, is identified as being at an advanced timing. This improves the starting performance of the engine.

However, as has been described, various components constituting the engine 10 including the crankshaft 20, the crank rotor 22, the crank sensor 61, the intake camshaft 30, the intake cam rotor 32, and the intake cam sensor 62 may vary from one product to another when manufactured. Assembly variation may also be caused when these components are assembled together. Such variations may cause deviation in the relationship between the predetermined rotational phase of the camshaft 30 and the crank angle CA from the above-described normal relationship. In this case, the crank angle CA identified based on the relationship between the predetermined rotational phase of the intake camshaft 30 and the crank angle CA is deviated from the actual crank angle CA. As a result, the cylinder 11a to 11d that reaches the compression top dead center earliest of all cylinders cannot be accurately identified or fuel injection through the fuel injection valve 12a to 12d cannot be carried out at an appropriate timing. This hampers adequate improvement in the starting performance of the engine.

To solve this problem, in the illustrated embodiment, when the predetermined rotational phase of the intake camshaft 30 is identified through the cam angle identification control after the crank angle CA has been identified through the main crank angle identification control, the relationship between the predetermined rotational phase of the intake camshaft 30 and the crank angle CA is learned through learning control, which will be described below. Then, when the crank angle CA is not identified through the main crank angle identification control and the predetermined rotational phase of the intake camshaft 30 is identified through the cam angle identification control, the crank angle CA is identified based on the predetermined rotational phase of the intake camshaft 30 and the relationship that has been learned through the learning control, through sub-crank angle identification control, which will be described below. The electronic control unit 70 that performs the sub-crank angle identification control corresponds to the third identifying section of the present invention.

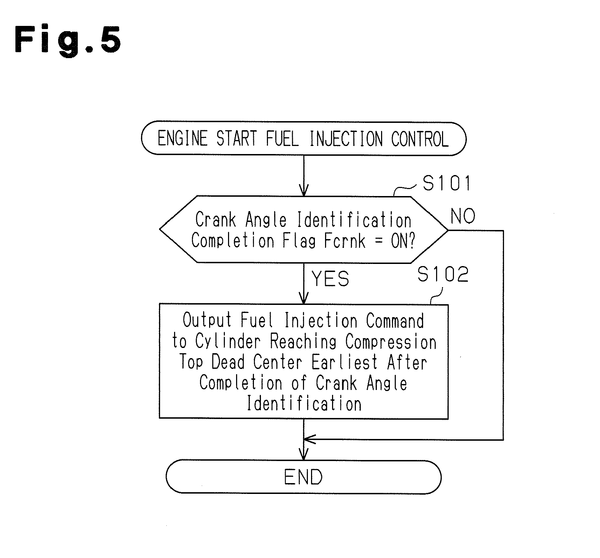

With reference to Fig. 5, fuel injection control for the time of starting of the engine will be described below. Fig. 5 is a flowchart representing the steps of a fuel injection control procedure for the time of starting of the engine. The series of procedure represented by the flowchart is repeatedly performed through the electronic control unit 70 each time the crank sensor 61 generates a crank pulse in the period from when the engine starting command is output to when the initial fuel injection command is output.

As represented by the flowchart, the procedure is started by determining whether a crank angle identification completion flag Fcrnk is "ON". Specifically, the crank angle identification completion flag Fcrnk is maintained as "OFF" unless the crank angle CA is identified through either the main crank angle identification control or the sub-crank angle identification control. Once the crank angle CA is identified, the crank angle identification completion flag Fcrnk is switched to "ON". If the crank angle identification completion flag Fcrnk is not "ON" (Step S101: "NO"), it is indicated that the crank angle CA is not yet identified and thus the fuel injection timing is indeterminable. The series of procedure is then suspended.

In contrast, if the crank angle identification completion flag Fcrnk is "ON" (Step S101: "YES"), the cylinder 11a to 11d that reaches the compression top dead center earliest of the cylinders 11a to 11d after identification of the crank angle CA based on the identified crank angle CA is identified. Then, a fuel injection command is output to the identified cylinder 11a to 11d (Step S102) and the series of procedures is suspended.

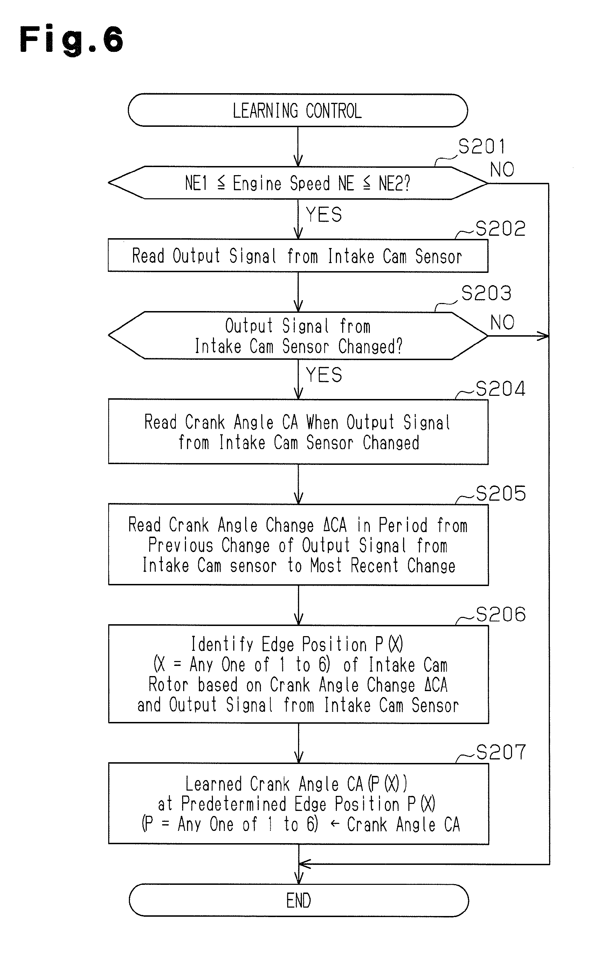

Next, the learning control of the illustrated embodiment will be described with reference to Fig. 6. Fig. 6 is a flowchart representing the steps of a learning procedure. The series of procedures represented by the flowchart is repeatedly performed through the electronic control unit 70 in operation of the engine 10 each time the crank sensor 61 outputs a crank pulse, with the crank angle CA identified through the main crank angle identification control.

With reference to Fig. 6, in the process, in order to determine whether the engine speed NE is in a range close to the idle speed, it is determined whether the engine speed NE is greater than or equal to a first predetermined engine speed NE1 and smaller than or equal to a second predetermined engine speed NE2 (Step S201). The reason for which such determination is carried out is that the timing for identifying the crank angle CA corresponds to the engine starting time at which the engine speed NE is comparatively low. If the engine speed NE is smaller than the first predetermined engine speed NE1 or greater than the second predetermined engine speed NE2 (Step S201: "NO"), it is indicated that the learning control cannot be executed accurately. The series of procedures is then suspended.

In contrast, when the engine speed NE is greater than or equal to the first predetermined engine speed NE1 and smaller than or equal to the second predetermined engine speed NE2 (Step S201: "YES"), the output signal (the Hi signal or the Lo signal) from the intake cam sensor 62 is read (Step S202). Subsequently, it is determined whether the output signal from the intake cam sensor 62 in the current control cycle has changed from the output signal from the previous control cycle (S203). If the output signal from the intake cam sensor 62 has not changed (Step S203: "NO"), the series of procedures is suspended.

If, contrastingly, the output signal from the intake cam sensor 62 has changed (Step S203: "YES"), the crank angle CA at the time when the output signal from the intake cam sensor 62 changed is read (Step S204). Then, the crank angle change amount ΔCA in the period from the previous change in the output signal from the intake cam sensor 62 to the most recent change is calculated (Step S205).

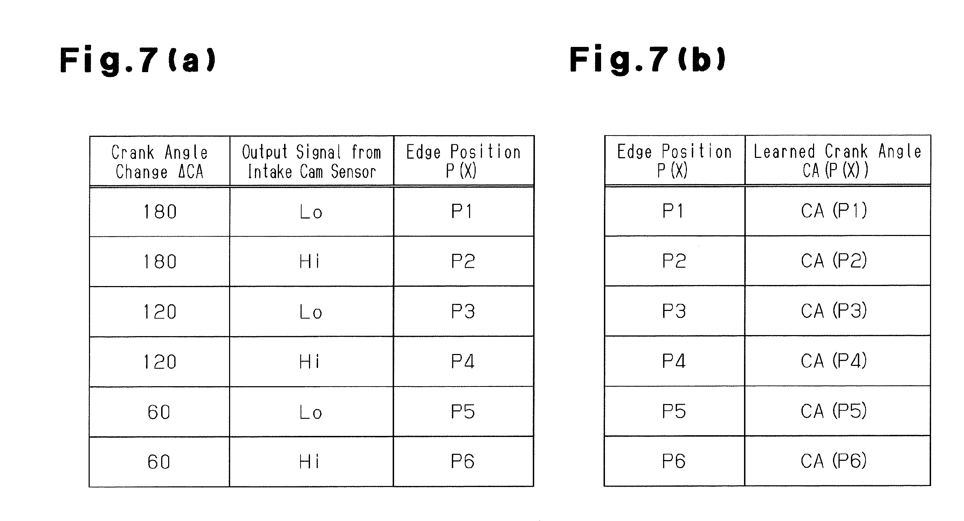

After the crank angle change amount ΔCA in the period from the previous change in the output signal from the intake cam sensor 62 to the most recent change is calculated, the edge position P(X) (X = any one of 1 to 6) of the intake cam rotor 62 at the most recent change in the output signal from the intake cam sensor 62 is identified based on the combination of the crank angle change amount ΔCA and the output signal (the Hi signal or the Lo signal) from the intake cam sensor 62 in the aforementioned period (Step S206), as illustrated in Fig. 7(a).

Subsequently, as illustrated in Fig. 7(b), the crank angle CA that has been identified through the main crank angle identification control is set to the learned crank angle CA(P(X)) at the predetermined edge position P(X) (X = any one of 1 to 6) (Step S207). The series of procedure is then suspended. The learned crank angle CA(P(X)) is memorized by a non-volatile memory in the electronic control unit 70. As a result, even though the power supply to the electronic control unit 70 is suspended, information regarding the learned crank angle CA(P(X)) is prevented from being lost.

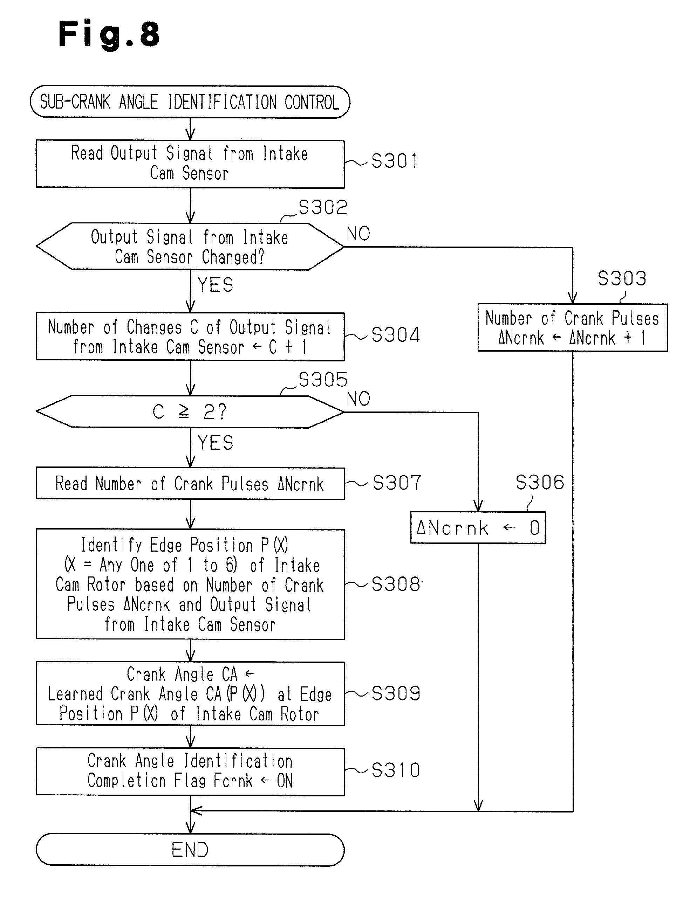

The sub-crank angle identification control of the illustrated embodiment will hereafter be described with reference to Fig. 8. Fig. 8 is a flowchart representing the steps of a sub-crank angle identification control process. The series of procedures represented by the flowchart is repeatedly performed through the electronic control unit 70 each time the crank sensor 61 generates a crank pulse, with the crank angle CA unidentified through the main crank angle identification control.

As represented by the flowchart, the process is started by reading the output signal from the intake cam sensor 62 (Step S301). It is then determined whether the output signal from the intake cam sensor 62 in the current control cycle has changed from the output signal in the previous control cycle (Step S302). Processing in Steps S301 and S302 are the same as processing in Steps S202 and S203 in the flowchart represented by Fig. 6. When the output signal from the intake cam sensor 62 has not changed (Step S302: "NO"), the number of crank pulse ΔNcrnk is increased by "1" (Step S303) and the series of procedures is suspended.

In contrast, if the output signal from the intake cam sensor 62 has changed (Step S302: YES), the number of changes C of the output signal from the intake cam sensor 62 is increased by "1" (Step S304). Subsequently, it is determined whether the number of changes C of the output signal from the intake cam sensor 62 is greater than or equal to 2 (Step S305). When the number of changes C is less than 2, that is, 1, (Step S305: "NO"), the number of crank pulses ΔNcrnk is initialized to "0" (Step S306) and the series of procedures is suspended.

If, contrastingly, the number of changes C of the output signal from the intake cam sensor 62 is greater than or equal to 2 (Step S305: "YES"), the number of crank pulses ΔNcrnk in the period from the previous change in the output signal from the intake cam sensor 62 to the most recent change is read (Step S307). Then, the edge position P(X) (X = any one of 1 to 6) of the intake cam rotor 62 at the most recent change in the output signal from the intake cam sensor 62 is identified based on the combination of the number of crank pulses ΔNcrnk and the output signal (the Hi signal or the Lo signal) from the intake cam sensor 62 in the aforementioned period (Step S308). Processing in Steps S307 to S309 is the same as the processing in Steps S204 to S206 in the flowchart represented by Fig. 6.

After the edge position P(X) of the intake cam rotor 62 is identified, the crank angle CA is identified based on the relationship between the edge position P(X) of the intake cam rotor 62 that has been set through the learning control and the learned crank angle CA(P(X)) (see Fig. 7(b)) (Step S31 0). The series of procedures is then suspended.

The controller for an internal combustion engine of the illustrated embodiment has the advantages described below.
(1) In the main crank angle identification control, the crank angle CA is identified based on output of the signal corresponding to the reference rotational phase of the crankshaft 20 from the crank sensor 61. In the cam angle identification control, the predetermined rotational phase of the intake camshaft 30 is identified based on output of the signal corresponding to the predetermined rotational phase of the intake camshaft 30 from the intake cam sensor 62. In the learning control, the relationship between the predetermined rotational phase of the intake camshaft 30 and the crank angle CA is learned when the predetermined rotational phase of the intake camshaft 30 is identified through the cam angle identification control after the crank angle CA has been identified through the main crank angle identification control. In the sub-crank angle identification control, when the crank angle CA is not yet identified through the main crank angle identification control and the predetermined rotational phase of the intake camshaft 30 is identified through the cam angle identification control, the crank angle CA is identified based on the predetermined rotational phase of the intake camshaft 30 and the aforementioned relationship that has been learned through the learning control. In this manner, the relationship between the predetermined rotational phase of the intake camshaft 30 and the crank angle CA is acknowledged accurately. When the crank angle CA is not yet identified through the main crank angle identification control and the predetermined rotational phase of the intake camshaft 30 is identified through the cam angle identification control, the crank angle CA is identified based on the relationship between the predetermined rotational phase of the intake camshaft 30 and the crank angle CA that has been learned through the learning control. As a result, before the crank angle CA is identified through the main crank angle identification control, the crank angle CA is identified accurately.
(2) The fuel injection control is carried out based on the crank angle CA that has been identified through the main crank angle identification control. However, if the crank angle CA is identified through the sub-crank angle identification control before the crank angle CA is identified through the main crank angle identification control, the cylinder 11a to 11d that reaches the compression top dead center earliest of all cylinders 11a to 11d is identified based on the crank angle CA that has been identified through the sub-crank angle identification control. Fuel is then injected into the identified cylinder 11a to 11d. In this manner, the cylinder 11a to 11d that reaches the compression top dead center earliest of the cylinders 11a to 11d, which is the cylinder 11a to 11d corresponding to the initial target of fuel injection, is identified as being at an advanced timing. This adequately improves the starting performance of the engine.

The controller for an internal combustion engine according to the present invention is not restricted to the configuration of the illustrated embodiment but may be modified as necessary according to the forms described below, for example.

In the cam angle identification control in the illustrated embodiment, the second rotational phase is identified as the predetermined rotational phase based on the number of crank pulses ΔNcrnk, which is the rotational phase difference of the crankshaft 20, in the period from the first rotational phase at which the output signal from the intake cam sensor 62 changes to the second rotational phase at which the output signal from the intake cam sensor 62 changes immediately afterwards and the output signal from the intake cam sensor 62 in the aforementioned period. However, the manner of identification by the second identifying section according to the present invention is not restricted to the above-described manner. Alternatively, for example, if the intake camshaft includes an intake cam rotor without a phase area in which the rotational phase difference of the crankshaft in the period from the first rotational phase at which the output signal from the intake cam sensor 62 changes to the second rotational phase at which the output signal from the intake cam sensor 62 changes again remains constant, the second rotational phase is identified as the predetermined rotational phase only based on the phase difference of the crankshaft in the aforementioned period.

The crankshaft 20 in the illustrated embodiment has the crank rotor 22 including the thirty-four teeth 23 and the two tooth missing portions 24. However, the configurations of the crank rotor and the crankshaft are not restricted to those of the illustrated embodiment. The crank rotor and the crankshaft may be modified to desired configurations as long as the crank sensor outputs a signal corresponding to the rotational phase of the crankshaft of an internal combustion engine.

In the illustrated embodiment, the rotational phase difference of the crankshaft in the period from when the crank sensor 61 identifies the reference rotational phase of the crankshaft to when the output signal from the intake cam sensor 62 changes for the first time after such identification is calculated. Based on the rotational phase difference of the crankshaft, the crank angle CA, which is the rotational phase of an internal combustion engine, is then identified. However, the manner of identification by the first identifying section according to the present invention is not restricted to the above-described manner. For example, when the reference rotational phase of the crankshaft is identified by the crank sensor 61, the rotational phase difference of the crankshaft in the period from the time at which the output signal from the intake cam sensor 62 changes immediately before identification of the reference rotational phase to the identification of the reference rotational phase may be calculated. The rotational phase of the internal combustion engine is then identified based on the rotational phase difference of the crankshaft. In other words, the identification by the first identifying section may be performed in any suitable manner as long as the rotational phase of an internal combustion engine is identified based on output of the signal corresponding to the reference rotational phase of the crankshaft from the crank sensor.

In the illustrated embodiment, the intake camshaft 30 has the intake cam rotor 32 including the large diameter portions 33a to 33c and the small diameter portions 34a to 34c. However, the configurations of the intake cam rotor and the intake camshaft are not restricted to the configurations of the embodiment. That is, the configurations of the intake cam rotor and the intake camshaft may be modified as needed as long as the intake cam sensor outputs a first signal and a second signal, which is different from the first signal, in correspondence with the rotational phase of the intake camshaft.

In the illustrated embodiment, the cam sensor is an intake cam sensor that outputs a signal corresponding to the rotational phase of an intake camshaft. However, the cam sensor may be an exhaust cam sensor that outputs a signal corresponding to the rotational phase of an exhaust camshaft. In other words, any suitable cam sensor may be employed as long as the cam sensor outputs a signal corresponding to the rotational phase of a camshaft mounted in an internal combustion engine.

In the illustrated embodiment, the present invention is employed in a diesel engine. However, an internal combustion engine that uses the invention is not restricted to the diesel engine. That is, the invention may be used in a gasoline engine. For example, in the case of a gasoline engine that injects fuel directly into the cylinders, if the rotational phase of the engine is identified by a third identifying section prior to a first identifying section, the cylinder that switches from an intake stroke to a compression stroke earliest of all cylinders when starting of the engine may be identified based on the rotational phase of the engine identified by the third identifying section. Then, fuel is injected into and ignited in the identified cylinder. Alternatively, in the case of a gasoline engine that injects fuel into an intake port, the cylinder that switches from an exhaust stroke to an intake stroke earliest of all cylinders after the engine is started may be identified based on the rotational phase of the engine that has been identified by the third identifying section, as in the case of the above-described case. Fuel is then injected into and ignited in the identified cylinder.

The invention may be configured in any suitable manner as long as a learning section and a third identifying section are included. The learning section learns the relationship between a predetermined rotational phase of a camshaft and the rotational phase of an internal combustion engine when the predetermined rotational phase of the camshaft is identified by a second identifying section after the rotational phase of the engine has been identified by a first identifying section. The third identifying section identifies the rotational phase of the engine based on the predetermined rotational phase of the camshaft and the relationship that has been learned by the learning section when the predetermined rotational phase of the camshaft is identified by the second identifying section with the rotational phase of the engine unidentified by the first identifying section.

## Claims

1. A controller for an internal combustion engine comprising:
a crank sensor for outputting a signal corresponding to rotational phase of a crankshaft of an engine;
a cam sensor for outputting a signal corresponding to rotational phase of a camshaft of the engine;
a first identifying section for identifying a rotational phase of the engine based on output of a signal corresponding to a reference rotational phase of the crankshaft from the crank sensor;
a second identifying section for identifying a predetermined rotational phase of the camshaft based on output of the signal corresponding to the predetermined rotational phase of the camshaft from the cam sensor;
a learning section for learning the relationship between the predetermined rotational phase of the camshaft and the rotational phase of the engine when the predetermined rotational phase of the camshaft is identified by the second identifying section in a state where the rotational phase of the engine has been identified by the first identifying section; and
a third identifying section for identifying the rotational phase of the engine based on the predetermined rotational phase of the camshaft and the relationship that has been learned by the learning section when the predetermined rotational phase of the camshaft is identified by the second identifying section in a state where the rotational phase of the engine is not identified by the first identifying section.

2. The controller according to claim 1, further comprising an engine control section that performs engine control based on the rotational phase of the engine identified by the first identifying section,
wherein, if the rotational phase of the engine is identified by the third identifying section before a rotational position of the engine is identified by the first identifying section, the engine control section carries out the engine control based on the rotational phase of the engine identified by the third identifying section.

3. The controller according to claims 1 or 2, wherein the learning section learns the relationship between the predetermined rotational phase of the camshaft and the rotational phase of the engine when the engine speed is in a range close to an idle speed.

4. The controller according to claims 2 or 3, wherein:
the engine is a diesel engine having a plurality of cylinders; and
the engine control section performs fuel injection control, wherein, when the rotational phase of the engine is identified by the third identifying section before the rotational position of the engine is identified by the first identifying section, the engine control section identifies the cylinder that reaches a compression top dead center earliest of the cylinders when starting of the engine based on the rotational phase of the engine identified by the third identifying section, and performs fuel injection into the identified cylinder.

5. The controller according to claims 2 or 3, wherein:
the engine is a gasoline engine that has a plurality of cylinders and injects fuel directly into the cylinders; and
the engine control section performs fuel injection control and ignition control, wherein, when the rotational phase of the engine is identified by the third identifying section before the rotational position of the engine is identified by the first identifying section, the engine control section identifies the cylinder that performs a compression stroke earliest of the cylinders when starting of the engine based on the rotational phase of the engine identified by the third identifying section, and performs fuel injection and ignition for the identified cylinder.

6. The controller according to claims 2 or 3, wherein:
the engine is a gasoline engine that has a plurality of cylinders and injects fuel into intake ports each connected to the corresponding one of the cylinders; and
the engine control section performs fuel injection control and ignition control, wherein, when the rotational phase of the engine is identified by the third identifying section before the rotational position of the engine is identified by the first identifying section, the engine control section identifies the cylinder that performs an intake stroke earliest of the cylinders when starting of the engine based on the rotational phase of the engine identified by the third identifying section, and performs fuel injection and ignition for the identified cylinder.

7. The controller according to any one of claims 1 to 6, wherein:
the cam sensor is configured to output a first signal and a second signal different from the first signal alternately in correspondence with the rotational phase of the camshaft; and
the rotational phase of the camshaft at the time when an output signal from the cam sensor changes between the first signal and the second signal is set as the predetermined rotational phase.

8. The controller according to claim 7, wherein:
the camshaft has a cam rotor that rotates integrally with the camshaft;
the cam rotor is formed by arranging large diameter portions each having a large dimension in a radial direction of the cam rotor and small diameter portions each having a small dimension in the radial direction of the cam rotor alternately in a circumferential direction of the cam rotor; and
the cam sensor is configured to output the first signal in correspondence with the large diameter portions and the second signal in correspondence with the small diameter portions.

9. The controller according to claims 7 or 8, wherein the first identifying section calculates a rotational phase difference of the crankshaft in the period from when the crank sensor identifies the reference rotational phase to when the output signal from the cam sensor changes for the first time after the identification of the reference rotational phase, and identifies the rotational phase of the engine based on the rotational phase difference of the crankshaft.

10. The controller according to any one of claims 7 to 9, wherein the second identifying section calculates a rotational phase difference of the crankshaft in the period from a first rotational phase at which the output signal from the cam sensor changes to a second rotational phase at which the output signal from the cam sensor changes again, and identifies the second rotational phase as the predetermined rotational phase based on the rotational phase difference of the crankshaft.

11. The controller according to claim 10, wherein:
the camshaft has two phase ranges in which the rotational phase difference of the crankshaft in the period from the first rotational phase at which the output signal from the cam sensor changes to the second rotational phase at which the output signal from the cam sensor changes again remains constant, and
the second identifying section identifies the second rotational phase as the predetermined rotational phase based on the output signal from the cam sensor in the period from the first rotational phase at which the output signal from the cam sensor changes to the second rotational phase at which the output signal from the cam sensor changes immediately afterwards.
